(19) Europäisches Patentamt
European Patent Office
Office européen des brevets

(11) Publication number: **0 429 731 A1**

# (12) EUROPEAN PATENT APPLICATION

(21) Application number: **89312568.2**

(22) Date of filing: **01.12.89**

(51) Int. Cl.5: **C08K 3/26**, C08K 5/17, A01G 9/14, C08K 13/02, //(C08K13/02,3:26,5:17)

(43) Date of publication of application:
**05.06.91 Bulletin 91/23**

(84) Designated Contracting States:
**ES FR IT Bulletin**

(71) Applicant: **AT PLASTICS INC.**
**90 Sheppard Avenue East**
**North York Ontario M2N 6H2(CA)**

(72) Inventor: **Nagata, Harry Haruo**
**26 Frith Road**
**Downsview Ontario, M3N 1G2(CA)**
Inventor: **Connelly, Peter Thomas**
**7 Farnham Drive**
**Brampton Ontario, L6X 4H7(CA)**

(74) Representative: **Gore, Peter Manson et al**
**W.P. THOMPSON & CO. Coopers Building**
**Church Street**
**Liverpool L1 3AB(GB)**

## (54) Composition for use in films.

(57) Polyethylene based resin for use in a greenhouse film comprising a hindered amine light stabilizer and a magnesium aluminum hydroxy carbonate hydrate in order to retard the deactivation of said light stabilizer by chlorine containing pesticides.

EP 0 429 731 A1

## COMPOSITION FOR USE IN FILMS

This invention relates to polyethylene films and more particularly to said films primarily for use as greenhouse films.

A characteristic of polyethylene film when used outdoors, for example, as greenhouse film, is that the film, when unprotected, is affected by exposure to ultraviolet light. The films are degraded in that they lose mechanical strength and discolour, which thereby reduces the amount of light capable of passing through the film. When used for greenhouse film this degradation of the film results in a reduction of the transmission of sunlight which is essential for plant growth.

It is known in the agricultural film industry that with the addition of a UV light stabilizer, such as nickel quencher additives, it is possible to protect the film against degradation caused by UV radiation. However, these additives discolour the film and partially block the transmission of sunlight. It is also known that with the addition of a hindered amine light stabilizer (HALS) compound to absorb UV radiation a colourless film with an extended useful life could be obtained,

On occasion, however, unexpected premature degradation of film stabilized by the HALS class of compounds has occurred. It is believed that chlorine and, in general, halogen containing pesticides react with the HALS thereby deactivating their UV stabilizing effect and thus leaving the film unprotected.

Growers generally would prefer to use the specific chlorine containing pesticide recommended by pesticide suppliers for their growing needs and, thus, resists changing to other pesticides that do not contain chlorine. Further, modifications to the greenhouse and to the pesticide application methods to avoid contact of the pesticide with the film are generally impractical. Yet further, control of exposure to chlorine containing pesticides on the external surface of the greenhouse, such as the exposure caused by the drift from local crop dusting, may not be possible.

In order to avoid the effects of chlorine containing pesticides, the agricultural film industry has returned to the greenhouse film stabilized with nickel quencher additives notwithstanding the disadvantages as hereinbefore described.

Accordingly, it can be seen that a clear greenhouse film, UV light stabilized by hindered amine light stabilizers that is unaffected by exposure to pesticides would offer an advantage to greenhouse operators.

It is known in the ethylene polymerization industry that the addition of magnesium aluminum hydroxy carbonate hydrate in trace amounts destroys the residual catalyst shortly after the manufacture of polyethylene based resin, Typically, amounts of the order of 0.1 w/w% of magnesium aluminum hydroxy carbonate hydrate are used for this purpose.

Surprisingly we have now found that the presence of larger amounts of magnesium aluminum hydroxy carbonate hydrate in a composition comprising a polyethylene base resin and a hindered amine light stabilizer gives a clear film that is protected against UV radiation and is less affected by exposure to chlorine containing pesticides.

Thus, it is an object of the present invention to provide a colourless, UV stabilized polyethylene film, suitable for use as a greenhouse film, that is less affected by exposure to chlorine containing pesticides.

Accordingly, the invention provides a polyethylene film comprising a polyethylene base resin, an ultraviolet light stabilizer of the hindered amine light stabilizer class and a sufficient amount of magnesium aluminum hydroxy carbonate hydrate to effectively retard the deactivation of said light stabilizer susceptible to deactivation by chlorine containing pesticides.

By the term "polyethylene base resin" is meant a base polymer selected from polyethylene, for example low density polyethylene, linear low density polyethylene, ethylene-vinyl acetate copolymer, and mixtures thereof, having a melt index of less than 4 dg/min. when measured according to ASTM D1238 condition E and a density of 918 - 940 $Kg/m^3$.

The preferred polyethylene base resin is low density ethylene-vinyl acetate copolymer having a melt index of less than 1 dg/min.

We have found that amounts of 0.1 to 5.0% w/w of magnesium aluminum hydroxy carbonate hydrate are effective in retarding the hindered amine light stabilizer deactivation. A preferred form of magnesium aluminum hydroxy carbonate hydrate is sold under the trade mark "DHT-4A" by Kyowa Chemical Industry Co. Ltd.

The level of magnesium aluminum hydroxy carbonate hydrate can be determined by one skilled in the art. Since the magnesium aluminum hydroxy carbonate hydrate lowers the susceptibility of the film to deactivation by chlorine containing pesticides, a sufficient amount to effectively retard said deactivation should be added. Higher chlorine exposure due to higher pesticide chlorine content, multiple pesticide applications and longer expected film life will require higher levels of magnesium aluminum hydroxy

carbonate hydrate.

Examples of sterically hindered amine light stabilizers (HALS) of use in the practice of the invention are compounds of the general formula:

1. HALS of Formula I:

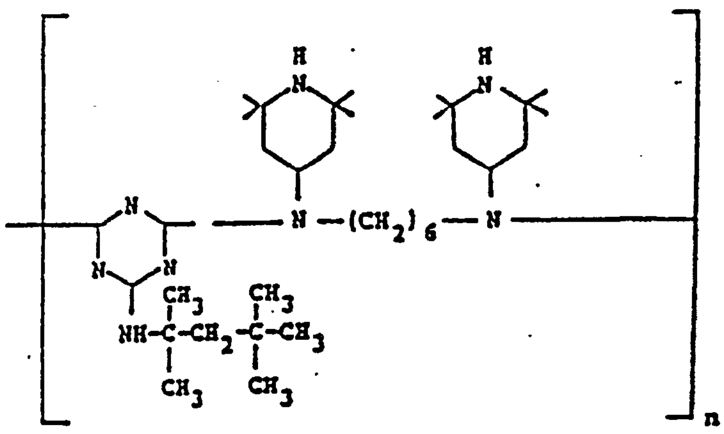

where n = 2,000 to 3,500:

having a melting point of 115 - 150°C, density of 1.01 g/cm$^3$ (20°C) and a pH (at 100 g/l water] of 8.5.

2. HALS of Formula II:

poly-6-morpholino-s-triazine=2,4-diyl ((2,2,6,6-tetramethy-4-piperidyl)imino) hexamethyl ((2,2,6,6-tetramethyl-4-piperidyl)imino) having a softening range of 110 - 130°C and volatility during thermogravimetric analysis (heating rate 10°C/minute), such that a 10% weight loss is observed at 340°C.

3. HALS of Formula III:

having a formula $(C_{20}H_{52}N_4)_n$ where n = 1-12, and as further disclosed in U.S. Patent No. 4,104,284 (1978) having a melting point of 93° - 98°C (199° - 208°F) and a molecular weight approximately 2000 average. As measured by thermogravimetric analysis, it exhibits essentially no weight loss up to 300°C (572°F).

The compositions according to the invention may optionally further comprise a non-HALS UV absorber, antioxidants, antiblock agents, slip additives and fillers.

The antioxidant should be selected to be compatible with the HALS, preferably not to contain sulphur, and to enhance the thermal stability of the polymer.

Antiblock and slip agents are of use to facilitate opening of folded film. Examples of such compounds are erucylamide slip agent, silica and calcium carbonate.

Fillers such as titanium dioxide may be used to confer a selected degree of opacity to the film. Other additives may be used to obtain other physical characteristics.

The amount of HALS, magnesium aluminum hydroxy carbonate hydrate and optional additives in the base polyethylene composition may be readily determined by the skilled man.

Generally, the HALS content for UV stabilization is generally between 0.1 - 1.5% w/w, while the amount of any optional benzophenone UV absorber should range from 0.1 -1.5% w/w.

It should also be apparent that although greenhouse coverings are discussed, any films exposed to pesticides and contaminants as given above, such as field crop coverings, shipping bags and other films used outdoors and subject to the influence of ultraviolet light would be of use in the practice of the invention as hereinbefore defined.

In a further aspect, the invention provides a composition of use in film, said composition comprising a polyethylene base resin, an ultraviolet light stabilizer of the hindered amine light stabilizer class and a sufficient amount of magnesium aluminum hydroxy carbonate hydrate to effectively retard the deactivation by chlorine containing pesticides when used in the form of said film.

The following examples illustrate, by comparison to compositions not containing magnesium aluminum hydroxy carbonate hydrate, the preferred polymer compositions according to the invention.

Definitions of additives used in the following examples of polyethylene compounds are as follows.

| | |
|---|---|
| C-I-L* 605V/22 | ethylene/vinyl acetate copolymer having 1.5% vinyl acetate content and 2200 ppm erucylamide; melt index 0.1 dg/min., and density 926 kg/$m^3$. |
| C-I-L* 610 | ethylene-vinyl acetate copolymer having 4% vinyl acetate; melt index of 0.5 dg/min. |
| C-I-L* 640 | ethylene-vinyl acetate copolymer having 4% vinyl acetate; melt index of 0.8 dg/min. |
| CHIMASSORB 944*FL | HALS of formula I. |
| CHIMASSORB 81* | 2-hydroxy-4-n-octyloxybenzophenone |
| IRGANOX B900* | Consisting of 4 parts IRGAFOS 168* and 1 part IRGANOX 1076*. |
| IRGANOX B215* | Consisting of 2 parts IRGAFOS 168* and 1 part IRGANOX 1010*. |
| IRGAFOS 168* | -tris (2,4-di-t-butylphenyl) phosphite. |
| IRGANOX 1076* | octadecyl 3,5-di-tert-butyl-4-hydroxyhydiocinnamate. |
| DSTDP | distearyl thiodiproprionate. |
| PENTAC* | 50% Decachloro bis (2,4-cyclopentadiene-1-yl) in an inert filler. |

* Trade Mark

| | |
|---|---|
| DHT-4A* | Magnesium aluminum hydroxy carbonate hydrate of the structural formula $[Mg_{1-x}Al_x(OH)_2]^{x+}[(CO_3)_{x/2}\ mH_2O]^{x-}$ where x = 0.3 to 0.33. |
| NAUGARD XL-1* | 2,2-oxamido bis-[ethyl 3-(3,5-di-*tert*-butyl-4-hydroxyphenyl) propionate]. |
| UV Chek AM340* | 2,4-di-t-butylphenyl 3,5-di-t-butyl-4-hydroxy benzoate. |
| TINUVIN 326* | 2-(3'-tert-butyl-2'-hydroxy-5'-methylphenyl)-5-chloro-benzotriazole. |
| ULTRANOX 626* | bis (2,4-di-t-butylphenyl) Pentaerythritol diphosphite containing 1% triisopropanolamine. |

CHIMASSORB, IRGANOX, IRGAFOS and TINUVIN are trade marks of Ciba Giegy.
NAUGARD is a trade mark of Uniroyal Chemical Co.
ULTRANOX is a trade mark of Borg-Warner Chemicals Inc.
UV Chek is a trade mark of Bedford Chemical Division, Ferro Corporation.
DHT-4A is a trade mark of Kyowa Chemical Industry Co., Ltd.
PENTAC is a trade mark of Sandoz Ltd.
C-I-L is a trade mark of C-I-L Inc.

Example 1

A polyethylene compound (No. 1) was prepared having the composition (expressed as % w/w):

| | |
|---|---|
| C-I-L 605 V/22* | 79.5 |
| C-I-L 610* | 11 |
| C-I-L 640V* | 7.7 |
| CHIMASSORB 944* | 0.7 |
| CHIMASSORB 81* | 0.45 |
| IRGANOX B900* | 0.13 |
| NAUGARD XL-1* | 0.02 |
| $Mg(OH)_2$ | 0.50 |
| | 100.00 |

* Trade Mark

Example 2

Polyethylene compound (No. 2) was prepared having the composition as set forth in Example 1 except that the level of C-I-L 610* used was 10.5% and 1.0% DHT-4A* was used in place of Mg $(OH)_2$.

Example 3

Polyethylene compound (No. 3) was prepared having the composition as set forth in Example 1 except that the level of C-I-L 605V/22* was 45.5%, the level of C-I-L 610* was 45.1%, and 0.4% zinc stearate was used in place of $Mg(OH)_2$.

Example 4

Polyethylene compound (No. 4) was prepared having the composition as set forth in Example 3 except that 0.4% calcium stearate was used in place of zinc stearate.

Example 5

Polyethylene compound (No. 5) was prepared having the composition as set forth in Example 4 except that 0.4% magnesium stearate was used in place of calcium stearate.

Films were made from the above compositions in a Davis-Standard* Thermatic extruder, Model 25-T equipped with a 5" MACRO* die using conventional blown film technology. The average film gauge for testing was 150 um for all examples.

Tensile strength properties, as an indication of the film's mechanical properties, such as yield (Y), break (B), and elongation (E) were measured on an INSTRON* Model 1122, according to ASTM D882, for each sample film.

One sample film of each composition was then sprayed once with a 5 w/w PENTAC* solution. Sprayed and unsprayed samples film for each composition were then exposed for 670 hours on a UVCON* UV testing apparatus. Samples were exposed to a 50/50 cycle of condensation at 50°C and UV light at 60° according to ASTM G-53-77.

Tensile strength properties for each sample exposed were then remeasured. The best results are shown in Table 1.

TABLE 1

| SAMPLE NO. | | 0 HRS | UNSPRAYED 670 HRS | SPRAYED 670 HRS |
|---|---|---|---|---|
| 1 | Y[1] | 11.7 | 12.5 | 13.3 |
| | B[2] | 24.1 | 24.1 | 13.3 |
| | E[3] | 579 | 593 | 62 |
| 2 | Y | 11.9 | 12.6 | 12.8 |
| | B | 21.8 | 21.4 | 13.4 |
| | E | 535 | 570 | 408 |
| 3 | Y | 11.2 | 11.6 | 13.3 |
| | B | 24.1 | 24.6 | 13.5 |
| | E | 569 | 638 | 148 |
| 4 | Y | 11.2 | 11.8 | 13.3 |
| | B | 27.4 | 26.1 | 13.4 |
| | E | 619 | 628 | 153 |
| 5 | Y | 10.9 | 11.7 | 13.1 |
| | B | 25.4 | 23.9 | 13.1 |
| | E | 638 | 643 | 192 |

1. Yield (Y) in MPa
2. Break (B) in MPa
3. Elongation (E) in %

It can be clearly seen that sample 2 containing magnesium aluminum hydroxy carbonate hydrate as

DHT-4A* has less degradation of tensile properties, particularly elongation, over the other samples.

The results obtained from examples 1, and 3, 4 and 5 are typical of films that do not contain any catalyst scavengers.

In order to further investigate the usefulness of DHT-4A* variety of formulations containing typical UV absorbers, with some containing DHT-4A* , were further tested. The EMMAQUA* accelerated outdoor test method is covered by ASTM Standard E 838 for general and solar materials and by D 4141 for automotive coatings. In practice, the EMMAQUA* test comprises a series of track-the-sun mirrors that reflect light on to a sample that has been backed and mounted on a test rack. Cooling air is circulated over the sample in order to maintain temperatures within 10°C of identical samples exposed at 5° South in June. Deionized water is sprayed on the samples at regular periods throughout the night. UV exposure measured in $MJ/m^2$ is recorded for each sample. An exposure to 924 $MJ/m^2$ is considered to be equivalent to three years normal outdoor exposure.

Films made from the following compositions were tested. Formulations for Examples 6 to 12 are shown on w/w basis.

<u>Example No. 6</u>
0.8% CHIMASSORB 944*
0.5% CHIMASSORB 81*
0.15% IRGANOX B900*
0.03% NAUGARD XL-1*
Balance is C-I-L: 605V/22*

<u>Example No. 7</u>
Polyethylene compound (No. 7) was prepared having the same composition as set forth in Example 6.

<u>Example No. 8</u>
0.75% CHIMASSORB 944*
0.5% CHIMASSORB 81*
0.15% IRGANOX B215*
0.07% DSTDP
1.51% DHT-4A*
0.20% Calcium Carbonate
Balance is C-I-L 605V/22*

<u>Example No. 9</u>
0.75% CHIMASORB 944*
0.50% CHIMASORB 81*
0.15% IRGANOX B215*
0.07% DSTDP
1.51% DHT-4A*
0.20% Calcium Carbonate
0.11% UV Chek AM340*
Balance is C-I-L 605V/22*

<u>Example No. 10</u>
0.75% CHIMASSORB 944*
0.50% CHIMASSORB 81*
0.15% IRGANOX B215*
1.51% DHT-4A*
0.20% Calcium Carbonate
0.11 UV Chek AM 340*
Balance is C-I-L 605V/22*

<u>Example No. 11</u>
0.83% CHIMASSORB 944*
0.55% TINUVIN 326*
0.17% IRGANOX B900*
0.11% UV Chek AM 340*
1.67% DHT-4A*
Balance is C-I-L 605V/22*

<u>Example No. 12</u>
1.11% CHIMASSORB 944*
0.55% TINUVIN 326*
0.12% ULTRANOX 626*

0.06% IRGANOX 1076*
0.22% Calcium Carbonate
Balance is C-I-L 605V/22*

All samples except sample 6 were treated with a 1 w/v% solution of PENTAC* by applying 2 or 3 drops of the solution between the film surface and the film backing plate. Samples were then exposed for 924 $MJ/m^2$. Tensile testing results from the samples exposed are shown in Table 2.

TABLE 2

| SAMPLE NO. | 924 $MJ/m^2$ TENSILE TEST | |
|---|---|---|
| 6 | Y[1] | 13.6 |
| | B[2] | 13.5 |
| | E[3] | 156 |
| 7 | Y | 12.6 |
| | B | 12.7 |
| | E | 69 |
| 8 | Y | 14.7 |
| | B | 14.9 |
| | E | 147 |
| 9 | Y | 14.1 |
| | B | 14.0 |
| | E | 141 |
| 10 | Y | 14.0 |
| | B | 14.1 |
| | E | 152 |
| 11 | Y | 13.8 |
| | B | 13.6 |
| | E | 121 |
| 12 | Y | 12.3 |
| | B | 13.5 |
| | E | 73 |

1. Yield (Y) in MPa
2. Break (B) in MPa
3. Elongation (E) in %

Sample 6 and 7 are the same formulation and do not contain DHT-4A*. Sample 7 has been treated with PENTAC* and shows degraded tensile properties when compared to sample 6. Sample 12 also does not contain DHT-4A* and shows similar tensile properties to sample 7.

Comparison of samples 7 and 12 with samples 8, 9, 10 and 11 show that regardless of the variations in formulations the presence of DHT-4A* gives improved performance. The improved performance level is similar to untreated film as shown in sample 6.

It can be seen from these results, and from the results of Table 1, that the magnesium aluminum hydroxy carbonate hydrate (DHT-4A*) is stabilizing the PENTAC* treated polyethylene films against premature degradation by UV light. Said films all have relatively better retention of mechanical properties as measured in the tensile testing, particularly the elongation results.

## Claims

1. A composition which comprises a polyethylene base resin, an ultraviolet light stabilizer of the hindered amine light stabilizer class and a sufficient amount of magnesium aluminum hydroxy carbonate hydrate to effectively retard the deactivation of the light stabilizers susceptible to deactivation by chlorine containing pesticides.
2. A composition according to claim 1, wherein the magnesium aluminum hydroxy carbonate hydrate has

the structural formula:
$[Mg_{1-x}Al_x(OH)_2]^{x+}[(CO_3)_{x/2}mH_2O]^{x-}$ where x = 0.3 to 0.33.

3. A composition according to claim 1 or 2, wherein the concentration of the magnesium aluminum hydroxy carbonate hydrate is 0.1 to 5.0% w/w.

4. A composition according to any of claims 1 to 3, wherein there is also present a non-HALS benzophenone ultraviolet light absorber.

5. A composition according to any of claims 1 to 4, wherein there is also present an antioxidant.

6. A composition according to any of claims 1 to 5, wherein there is also present an antiblock agent.

7. A composition according to any of claims 1 to 6, wherein there is also present a filler.

8. A film comprising a composition as claimed in any of claims 1 to 7.

9. A greenhouse film comprising a film as claimed in claim 8.

10. A shipping bag comprising one or more plies formed of a film as claimed in claim 8.

European Patent Office

# EUROPEAN SEARCH REPORT

Application Number

EP 89 31 2568

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | CHEMICAL ABSTRACTS, vol. 111, no. 10, 1 January 90<br>Columbus, Ohio, USA<br>Mitsubishi Kasei Vinyl K.K: "Hydrotalcite and Hindred Amine-contg. Polyolefin Films for Agricultural Use. & JP-A-01006041 10/1/1989"<br>page 70; column 2; ref. no. 79551X<br>* abstract *<br>--- | 1-9 | C08K3/26<br>C08K5/17<br>A01G9/14<br>C08K13/02<br>//(C08K13/02,<br>C08K3:26,<br>C08K5:17) |
| X | CHEMICAL ABSTRACTS, vol. 109, no. 18, 31 October 1988<br>Columbus, Ohio, USA<br>Mikado Kako K.K: "Durable Agricultural Films & JP-A-63175072 19/7/1988"<br>page 77; column 2; ref. no. 151118Q<br>* abstract *<br>----- | 1-9 | |

TECHNICAL FIELDS SEARCHED (Int. Cl.5)

C08K
A01G
C08L

The present search report has been drawn up for all claims

| Place of search | Date of completion of the search | Examiner |
|---|---|---|
| THE HAGUE | 20 JULY 1990 | WILSON A.J.D. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document



EPO FORM 1503 03.82 (P0401)